# EUROPÄISCHE PATENTSCHRIFT

(11) **EP 1 796 819 B1**
(45) Veröffentlichungstag und Bekanntmachung des Hinweises auf die Patenterteilung: **21.07.2010**
(21) Anmeldenummer: 05790777.6
(22) Anmeldetag: 27.09.2005
(51) Int. Cl.: B01D 53/06, B01D 53/26, F24F 3/14, F24F 3/147

(54) **HERSTELLUNG VON SPEICHERMASSENWICKEL FÜR ROTATIONSWÄRMEAUSTAUSCHER**
PRODUCTION OF WOUND STORAGE MATERIAL FOR ROTATIONAL HEAT EXCHANGERS
PRODUCTION D'UN ENROULEMENT DE MATERIAU D'ACCUMULATION POUR ECHANGEUR DE CHALEUR ROTATIF

(30) Priorität: 08.10.2004 DE 102004049418
(43) Veröffentlichungstag der Anmeldung: 20.06.2007
(73) Patentinhaber: R. Scheuchl GmbH, 94496 Ortenburg (DE)
(72) Erfinder: SCHEUCHL, Richard, 94496 Ortenburg (DE)
(74) Vertreter: Faul, Claus-Peter
(86) Internationale Anmeldenummer: PCT/DE2005/001703
(87) Internationale Veröffentlichungsnummer: WO 2006/039888

(56) Entgegenhaltungen:
- EP-A- 0 803 685
- EP-A- 0 957 320
- AT-B- 351 061
- GB-A- 1 452 982
- GB-A- 1 570 734
- US-A- 5 534 186

## Beschreibung

Die vorliegende Erfindung bezieht sich auf ein Verfahren zur Herstellung eines Speichermassenwickels für einen Rotationswärmeaustauscher. Derartige Rotationswärmeaustauscher werden in verschiedenen Abmessungen zur Wärme- und Feuchtigkeitsrückgewinnung in Lüftungsgeräten und lufttechnischen Anlagen eingesetzt.

Derartige Rotoren werden auch Sorptionsrotoren genannt, weil sie nicht nur als Wärme-, sondern auch gleichzeitig als Feuchtigkeitsaustauscher benutzt werden. Ein derartiger Sorptionsrotor wird ausführlich unter Zitierung des vorausgegangenen einschlägigen Standes der Technik in der DE 101 57 550 C2 bzw. der parallelen EP 1446216 A1 (WO 03043719) beschrieben, wobei die Einzelheiten der erforderlichen Beschichtung mit einem Sol-Gel-System der US PS 5,685,897 entnommen werden können.

Die Werkstoffmatrix des Sorptionsrotors gemäß DE 101 57 550 wird aus Zellulosepapier gebildet und mittels keramischer Materialien aus einem Sol-Gel-Gemisch erst infiltriert, dann über einen längeren Zeitraum getrocknet, bevor es weiterbehandelt, das heißt in die gewünschte Wabenstruktur gebracht werden kann. Um diese Wabenstruktur zu stabilisieren, wird diese zu einer selbsttragenden Verbundkeramik bei hohen Temperaturen gesintert. Hierbei werden die Celluloseschichten "keramisiert". Dadurch bleibt die Struktur im Inneren ein isolierend wirkendes Fasergebilde und die Herstellvorgänge sind zeit- und kostenaufwendig.

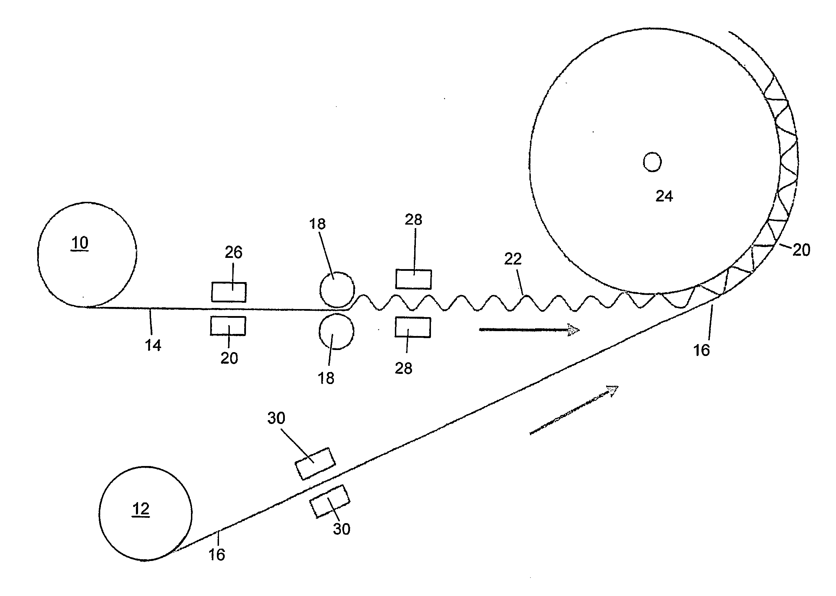

Aber auch die als Grundmaterial verwendeten Metallfolien, Blechstreifen oder ähnliche Folien, wie es beispielsweise in der DE 43 13 976 A1 beschrieben ist, führen nur über mehrere nacheinander folgende Herstellschritte zeitraubend zu einem brauchbaren Sorptionsrotor. Diese Schrift beschreibt den üblichen und weit gebräuchlichen Stand der Technik. Sowohl die gewellte (16) als auch die ungewellte Deckschicht (15) werden zuerst (gemäß Beschreibung in den Absätzen [0022] bis 0025] und den Figuren 3 und 4)in einem ersten Tank (1) mit einem Klebstoff (2) benetzt, der bei (3) abgequetscht werden muss, damit in einem Tank (4) Kieselsäuregel (5) anhaften kann. Nicht anhaftendes Material wird bei (7) abgesaugt und dann wird das Band durch eine Heizzone (8) geschickt. Das so beschichte Material wird dann wieder aufgewickelt und in weiteren Arbeitschritten gewellt oder nicht und aufeinander gewickelt. Insbesondere die langen Trocknungszeiten, die für die aufgebrachten Absorptionsschichten vor einer Weiterverarbeitung erforderlich sind, verlangsamen und verteuern den Herstellvorgang.

Während der vorstehend abgehandelte Stand der Technik sich auf Rotationsmaschinen für einen Wärmeaustausch in verhältnismäßig niedrigem Temperaturbereich beziehen, müssen nicht rotierende Wickel für einen Katalysator zur Abgasreinigung, wie sie beispielsweise in DE 42 14 340 beschrieben sind, für wesentlich höhere Temperaturen ausgelegt werden, um funktionieren zu können, unabhängig davon, dass andere aufgetragene Mittel als Katalysator wirksam werden. Deshalb wird bei diesem Stand der Technik ein Zusatzmetall streifenförmig aufgebracht, um mit den Wellenköpfen verschweißt oder verlötet zu werden. Ebenso bezieht sich die DE 35 27 111 A1 auf einen Abgaskatalysator mit einem stehenden Wickel, der sogar die Besonderheit einer fast elliptischen oder keilähnlichen Form aufweist. Dafür wir der Wickel mit einer Teleskopeinrichtung gereckt.

Auch die beiden DE 23 02 746 A und GB 14 52 982 A betreffen einen Abgaskatalysator, also einen stehenden Wickel mit anderen Katalysatorstoffen, während die US-A 5,685 897 über die stoffliche Zusammensetzung eines Adsorptionsmittels für die vorliegende Aufgabe Vorschläge unterbreitet, aber nichts über das Herstellverfahren eines Rotors besagt.

Aus EP 803 685 A ist ein Absorberrotor zur Luftreinigung in Fahrgastzellen von Kraftfahrzeugen bekannt, der abwechselnd aus gewellten und glatten Metallbändern gewickelt ist. Die Beschichtung dieses Substrates mit absorbierendem Material erfolgt vorzugsweise nach dem Wickeln des Rotors.

EP 957 320 A betrifft ein rotorförmiges Wärmetauscherelement mit einem gewellten und einem glatten Aluminiumstreifen, die mit einem hygroskopischen Material beschichtet sind. Die Streifen werden nach der Beschichtung gestapelt, um sie dann auf eine Nabe zu wickeln. Während des Wickelvorgangs werden die gewellten Streifen im Bereich ihrer Wellenberge mit Klebstoff beschichtet.

In AT 351 061 B ist ein Rotor für Feuchtigkeits- und/oder Wärmetauscher beschrieben, dessen Herstellung in einer Vielzahl von Schritten abläuft und eine lange Zeitdauer benötigt.

Gegenstand der GB 1 452 982 A ist ein katalytischer Reaktor zur Abgasreinigung bei Brennkraftmaschinen, für dessen Herstellung ein glattes und ein gewelltes Stahlblech über Leitwalzen und Umlenkwalzen durch ein Beschichtungsbad geführt werden.

Dementsprechend ist Aufgabe der vorliegenden Erfindung, ausgehend von einem herkömmlichen metallischen Grundmaterial oder solchem auf Kunststoffbasis einen wirksamen Speichermassenwickel für einen Rotor einfacher, schneller und kostengünstiger herzustellen.

Die Lösung dieser Aufgabe ist dem Hauptanspruch zu entnehmen.

Um die Erfindung besser verständlich zu machen, wird nachfolgend auf ein schematisch in der Zeichnung dargestelltes Ausführungsbeispiel der Erfindung Bezug genommen.

Ausgegangen wird gleichzeitig von zwei Vorratsspulen 10 und 12 mit gleicher oder unterschiedlicher Rotorfolie 14 und/oder 16, die sogleich eine wabenförmige Werkstoffmatrix 20 bilden sollen. Das Folienmaterial 14, 16 kann beliebig sein. Es kann sowohl eine Kupferwie auch Aluminiumfolie oder eine Edelstahlfolie oder eine entsprechend geeignete und präparierte Kunststofffolie sein. Während die eine Folie 14 in einer üblichen Ondulierstation 18 in die gewünschte Wellenform 22 gebracht wird, bleibt die von einer Vorratsspule 12 abgewickelte und gegengelegte Folie 16 glatt.

Das Wesentliche der Erfindung liegt darin, dass beide Folien 14 und 16 unmittelbar vor dem Zusammenbringen auf einem danach bereits fertigen Rotor 24 ihre Sorptionsbeschichtung erhalten. Hierfür durchläuft die Folie 14 vor der Ondulierstation 18 eine Sorptionsaufbringstation 26 oder hinter der Ondulierstation 18 eine Sorptionsaufbringstation 28. Die Folie 16 wird vor dem Zusammenführen mit der ondulierten Folie 22 durch eine Sorptionsaufbringstation 30 geführt. Das Aufbringen in den Stationen 26, 28 oder 30 kann auf ganz verschiedene Art erfolgen, entweder durch Streichen, Spritzen, Sprühen oder Rakeln oder jeder anderen geeigneten Methode. Die Aktivierungsstoffe können ebenfalls nach dem gewünschten Zweck gewählt werden. Es können Sol-Gel-Systeme, Zeolithe oder Ionenaustauscher mit einem geeigneten Bindemittel aufgebracht werden. Wenn beispielsweise aggressive Gase in der Austauschluft enthalten sein können, sind geeignet beständige Stoffe oder Stoffgemische einzusetzen. Zum Zurückhalten unerwünschter aromatischer Anteile oder unangenehmer Gerüche aus der Austauschluft eignen sich hohe Anteile von Ionenaustauschern in dem aktiven Stoff.

Das Wesentliche der Erfindung ist die dahinter stehende Erkenntnis, dass sich viele bislang für notwendig erachtete Herstellverfahrensschritte dadurch einsparen lassen, dass es nicht erforderlich ist, die erforderlichen Stoff und Materialverbindungen mit verschiedenen Zwischentrocknungphasen nacheinander, sondern in einem Arbeitsgang ablaufen zu lassen. Damit ist ein Vorurteil überwunden und der Vorteil eins schnellen Herstellvorganges gewonnen worden.

## Patentansprüche

1. Verfahren zur Herstellung eines Speichermassenwickels für einen Rotationswärmetauscher zur Wärme- und Feuchtigkeitsrückgewinnung in Lüftungsgeräten und lufttechnischen Anlagen mit einer gewickelten Wabenstruktur aus abwechselnd einem gewellten Folienstreifen (22) und einem glatten Folienstreifen (16), wobei das Verfahren aus folgenden Schritten besteht:
a) zunächst werden der glatte Folienstreifen (16) und der noch nicht gewellte Folienstreifen (14) von zugehörigen Vorratsspulen (10, 12) gleichzeitig abgezogen.
b) anschließen durchlaufen beide Folienstreifen (14, 16) gleichzeitig oder nahezu gleichzeitig eine Sorptionsaufbringstation (28, 30) und erhalten darin eine Sorptionsbeschichtung,
c) wobei der noch glatte Folienstreifen (14) zum Erzeugen des gewellten Folienstreifens (22) eine Ondulierstation (18) durchläuft,
die vor oder nach der Sorptionsaufbringstation (26, 28) angeordnet ist,
d) worauf die beiden beschichteten Folienstreifen (16, 22) unmittelbar danach zusammengeführt und zu einem fertigen Rotorwickel (24) gewickelt werden.

## Claims

1. Process for producing a coil of absorbing material for a rotating heat exchanger adapted for heat and humidity recovery in ventilation appliances and plants and comprising a honeycombed structure made up alternately of a corrugated strip (22) and a plane strip (16), said process having the following steps:
a) first the plane strip (16) and the not yet corrugated strip (14) are simultaneously drawn from corresponding supply coils (10, 12),
b) subsequently both of said strips (14, 16) simultaneously or nearly simultaneously run through a sorption coating station (28, 30) where they are coated with absorbing material,
c) wherein the still plane strip (14) is running through a corrugation station (18) to produce the corrugated strip (22), said corrugation station (18) being positioned upstream or downstream of said sorption coating station (26, 28),
d) whereupon both of said coated strips (16, 22) are directly brought together to wind a finished rotor coil (24).

## Revendications

1. Procédé pour la fabrication d'un enroulement de matériau d'accumulation pour un échangeur de chaleur rotatif apte à la récupération de chaleur et d'humidité dans des appareils de ventilation et d'aération, comprenant une structure en nid d'abeilles formée par un enroulement alternant une bande de film ondulée (22) et une bande de film lisse (16), ledit procédé comprenant les phases suivantes :
a) initialement, la bande de film lisse (16) et la bande de film encore non ondulée (16) sont déroulées simultanément de leur propre bobine d'alimentation (10, 12),
b) ensuite les deux bandes de films (14, 16) passent simultanément ou presque simultanément à travers une station de sorption (28, 30) où elles reçoivent une couche de sorbant,
c) la bande de film encore lisse (14) traverse une station d'ondulation (18) pour former une bande de film ondulée (22), ladite station (18) étant positionnée en aval ou en amont de la station de sorption (26, 28),
d) après quoi les deux bandes de film revêtues de sorbant (16, 22) sont réunies en un seul rouleau pour former une bobine de rotor (24).
